Europäisches Patentamt

(19) European Patent Office

Office européen des brevets

(11) Publication number: **0 026 063**

**A1**

(12) EUROPEAN PATENT APPLICATION

(21) Application number: **80303107.9**

(22) Date of filing: **04.09.80**

(51) Int. Cl.³: **B 23 D 41/06**
**B 23 Q 7/00**

(30) Priority: **05.09.79 US 72797**

(43) Date of publication of application:
**01.04.81 Bulletin 81/13**

(84) Designated Contracting States:
**DE GB IT**

(71) Applicant: **THE BABCOCK & WILCOX COMPANY**
**1010 Common Street P.O. Box 60035**
**New Orleans, Louisiana 70160(US)**

(72) Inventor: **Russell, John Xavier**
**121 Scottsdale Drive**
**Troy Michigan 48084(US)**

(74) Representative: **Cotter, Ivan John et al,**
**D. YOUNG & CO. 10 Staple Inn**
**London WC1V 7RD(GB)**

(54) Device for supplying parts to and for removing parts from a machining station.

㊗ An automatic loading and unloading device (10) that can be used for high production machinery utilizes 'straight-through' feeding of workpieces (78) across a shuttle table (16) to a machining station and through the machining station to a discharge chute (70), minimising jamming of the pieces (78). In addition, the device (10) simultaneously indexes new workpieces (78) on the shuttle table (16) by means of a loading/unloading assembly (14) while previous workpieces (78) are being machined. The device (10) can also be used for supplying and indexing workpieces (78) on a batch basis rather than an individual workpiece basis.

./...

FIG. 1

1

# DEVICE FOR SUPPLYING PARTS TO AND FOR
## REMOVING PARTS FROM A MACHINING STATION

The present invention relates to a device for supplying parts to and for removing parts from a machining station, for instance a broaching station of an automatic broaching machine.

High production metal cutting machines typically have loading and unloading devices associated with them to assist in the supply of parts to the metal cutting station and the removal of the finished parts therefrom. Many types of loading and unloading devices have been developed. However, most of these devices require multiple sequential indexing operations before the incoming part reaches the metal cutting station and do not simultaneously machine the part while a new incoming part is being indexed into position. In addition, most of the indexing operations involve changing the direction of travel of the incoming part, which causes some parts to jam the incoming portions of these devices. The conditions appear to be especially true for loading and unloading devices used with automatic broaching machines. The loading and unloading devices for these machines typically have multiple indexing operations which change the direction of travel of the parts to be broached and do not utilize simultaneous indexing/machining operations. The end result is that the broaching operation is relatively slow, the broaching machine is not utilized at its optimum efficiency and jamming of incoming parts is relatively common.

According to a first aspect of the present invention there is provided a device for supplying parts to and for removing parts from a machining station, the device being characterised in that it comprises a shuttle table on which, in use, said parts are conveyed to the machining station, means for indexing said parts on the shuttle table as they traverse the shuttle table to the machining station, and means for removing said parts from the machining station, the indexing means being selectively actuatable so as to permit the advancement of said parts on the shuttle table and the introduction of new parts onto the shuttle table during various phases of a machining process performed at the machining station.

According to a second aspect of the present invention there is provided a device for supplying parts to and for removing parts from a machining station, the device being characterised in that it comprises a shuttle table on which, in use, said parts are conveyed to the machining station, means for indexing said parts on the shuttle table as they traverse the shuttle table to the machining station, and means for removing said parts from the machining station, the indexing means being operative to convey said parts on the shuttle table to the machining station and away therefrom in an at least approximately straight-line path.

A loading and unloading device constituting a preferred embodiment of the invention and described hereinbelow utilizes a minimum of indexing operations, employs 'straight through' feeding of parts to be machined, and performs various operations, such as indexing and machining, simultaneously. The preferred device is designed for use with an automatic broaching machine. However, devices embodying the present invention can in general be used with various types of high production machinery. The preferred device utilizes 'straight-through' feeding of the parts through a broaching station to a discharge chute, thus minimizing the possibility of the parts jamming the device and/or the broaching station. In addition, the device utilizes a minimum of indexing operations prior to broaching and simultaneously performs these indexing operations while machining the part. In this manner, the speed of the loading and unloading operation is increased considerably and the broaching machine operates near its optimum efficiency.

In view of the foregoing, it will be seen that a loading and unloading device embodying the invention can incorporate the following useful features. It utilizes 'straight-through' feeding of parts through the device and the machine it supplies with parts. It utilizes a minimum of indexing operations to transport the parts therethrough. It performs an operation, such as part indexing, simultaneously with the operations of the machine that it is supplying with parts and removing finished parts therefrom. It can simultaneously supply a batch of parts to a machine while the machine is simultaneously performing an operation on another batch of parts.

Devices embodying the invention preferably include means for determining the suitability of incoming parts for the operation to be performed thereon and rejecting those parts found to be unsuitable.

The invention will now be further described, by way of illustrative and non-limiting example, with reference to the accompanying drawings, in which:

Figure 1 is a front plan view of a loading and unloading device constituting a preferred embodiment of the invention, partially in schematic form, showing the relative position of components thereof after a broaching operation has been completed;

Figure 2 is a front plan view of the loading and unloading device, partially in schematic form, showing the relative position of the components during removal of a finished part from a broaching station and retraction of a broach into an upper tool holder;

Figure 3 is a front plan view of the loading and unloading device, partially in schematic form, showing the relative position of the components during the beginning of the broaching operation;

Figure 4 is a front plan view of the loading and unloading device, partially in schematic form, showing the relative position of the components and particularly illustrating the tilting of a shuttle cylinder and a loading/unloading assembly during the broaching operation;

Figure 5 is a front plan view of the loading and unloading device, partially in schematic form, showing the relative position of the components after the broaching operation has been completed and prior to the return of the shuttle cylinder and the loading/unloading assembly to a horizontal position; and

Figure 6 is a top plan view of an input portion of the loading/unloading device showing a plurality of inputs for a broaching machine that can broach more than one part at a time.

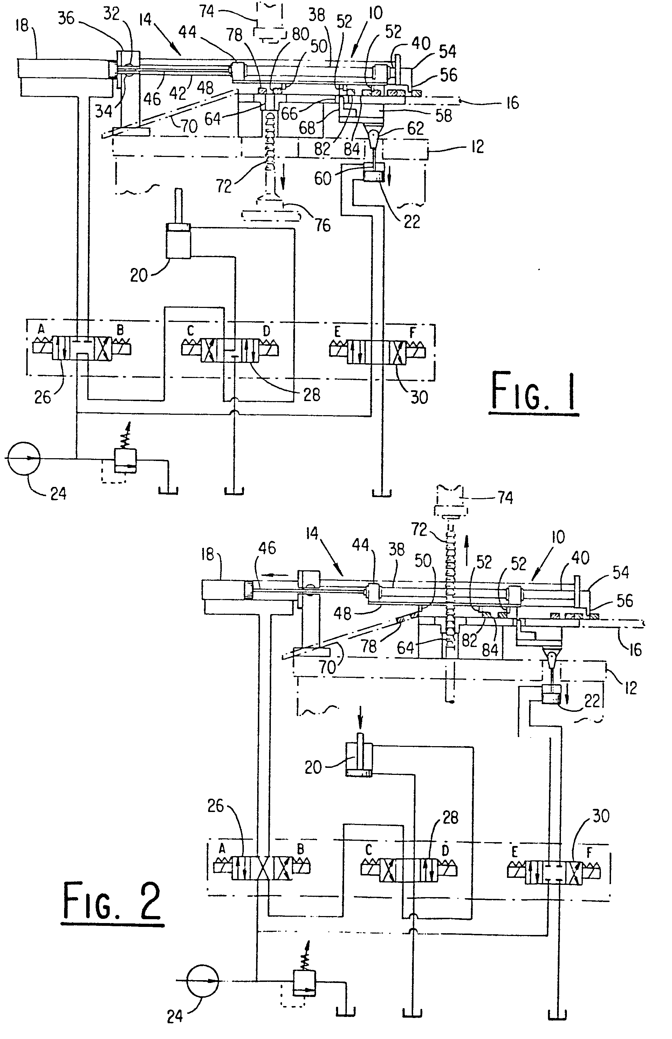

Referring now to the drawings, Figure 1 shows a front plan view of an automatic loading and unloading device 10 which is capable of being used with a broaching machine. The automatic loading and unloading device 10 is composed of a main frame 12, a loading/unloading assembly 14, a shuttle table 16, a hydraulic shuttle cylinder 18, a hydraulic metering cylinder 20, a hydraulic lift cylinder 22, and a source 24 of hydraulic fluid. The shuttle table 16, lift cylinder 20 and metering cylinder 22 are firmly attached to the main frame 12. Each of the hydraulic cylinders 18, 20 and 22 is provided with a two-position control valve, i.e., a control valve 26 is provided for the shuttle cylinder 18, a control valve 28 is associated with the metering cylinder 20, and a control valve 30 regulates the operation of the lift cylinder 22.

The shuttle cylinder 18 is attached to the loading/unloading assembly 14 by standard fastener means and the complete assembly is pivotally attached to the main frame 12 by means of a pin 32 received in an aperture 34 provided in an upright member 36 attached to the main frame 12. The loading/unloading assembly 14 comprises a carriage assembly 38 which is laterally movable over guide bars 40 which are retained at either end thereof by a frame 42 of the loading/unloading assembly 14. One end 44 of the carriage assembly 38 is attached to an output shaft 46 of the shuttle cylinder 18 so as to be laterally movable therewith on the guide bars 40. Attached to the underside of the carriage assembly 38 is a pair of slide plates 48 to which is movably attached an ejecting finger 50 and spaced apart positioning fingers 52. The slide plates 48 are in a spaced relationship permitting the passage of a broaching tool therebetween. An end 54 of the loading/unloading assembly 14 opposite the shuttle cylinder 18 is provided with a sizing probe 56 whose function is to ensure that only workpieces with the proper size aperture therein are permitted to be advanced to a broaching station. Also attached to the frame 42 is a bracket 58 which is connected to an output shaft 60 of the lift cylinder 22 by means of a clevis 62 and which permits the complete assembly comprising the shuttle cylinder 18 and loading/unloading assembly 14 to be pivotally rotated as a unit about the pin 32.

The shuttle table 16 has provided therein an aperture 64 of sufficient size to permit the passage of a desired broach therethrough. Another aperture 66 is also provided in the shuttle table 16 for the receipt of a stop pin 68 which is connected to the bracket 58 and is movable therewith. A discharge side of the shuttle table 16 is provided with a discharge chute 70 to assist in the removal of finished machined workpieces from the broaching station.

With respect to the broaching tools required, a broach 72 of the desired size is held in a tool holder 74 above the workpiece to be broached and the shuttle table 16. A pulling tool 76 is oppositely disposed from the tool holder 74 and positioned beneath the shuttle table 16 and is used to engage the free end of the broach 72 as it passes through the workpiece being broached and through the aperture 64 in the shuttle table 16 thus permitting the tool holder 74 to disengage the upper end of broach 72 so that the finished machined workpiece can be removed from the broaching station.

As for the operation of the automatic loading and unloading device 10, assume a workpiece 78 having an aperture 80 has been broached. Referring again to Figure 1, a finished machined workpiece 78 is shown positioned above the aperture 64 in the shuttle table 16 and above the broach 72, which is below the table 16 and is held by the pulling tool 76. At the completion of the broaching operation, sensing means cause the deenergization of a solenoid E for the control valve 30 and the energization of solenoids B and D for the control valves 26 and 28, respectively, resulting in the actuation of the shuttle cylinder 18 and the metering cylinder 20 which causes the output shaft 46 of the cylinder 18 and the cariage assembly 38 attached thereto to move to the left to the position shown in Figure 2. While so moving, the ejecting finger 50 pushes the finished machined workpiece 78 to the discharge end of the shuttle table 16 and into the discharge chute 70. At the same time, the positioning fingers 52 advance the next workpiece 82 toward the broaching station.

The internal volume of the metering cylinder 20 is approximately one-half that of the shuttle cylinder 18, thus causing the lateral movement of the output shaft 46 and carriage assembly 38 to be approximately one-half the overall length of the guide bars 40. By interrupting the travel of the carriage assembly 38 in this manner, the broach 72 can be advanced upwardly through the empty broaching station and through the spaced apart slide plates 48 so that its top end can be gripped by the tool holder 74 and raised above the shuttle table 16. After the broach 72 is gripped by the tool holder 74, the pulling tool 76 becomes disengaged from the bottom end thereof allowing the bottom end to be free permitting the broach 72 to be raised to its fully retracted position. It should be noted that the broach 72 is retracted through an empty broaching station rather than through the finished machined workpiece 78 since the latter approach would result in metal chips being retained in the broach teeth to crack the broach and scratch the machined walls of the workpiece 78.

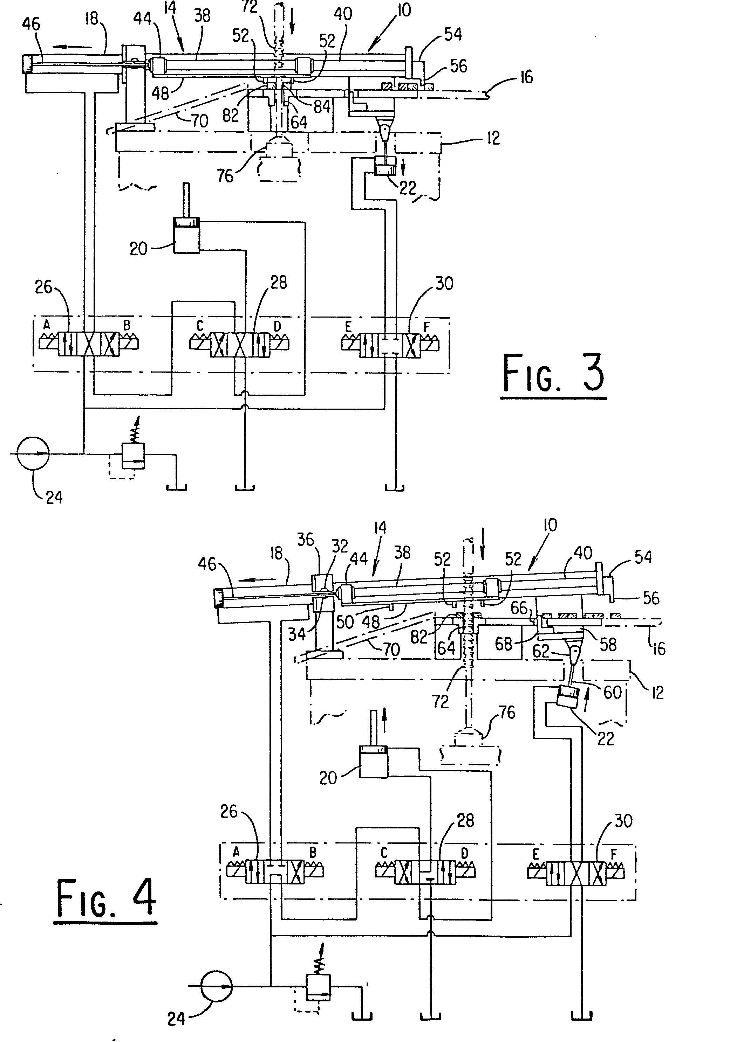

When the tool holder 74 and broach 72 reach their fully retracted upright position, sensing means cause deenergization of the solenoid D for the control valve 28 and energization of a solenoid C for the control valve 28 which results in deactuation of the metering cylinder 26. This deactuation allows the output shaft 46 of the shuttle cylinder 18 to become fully retracted within the cylinder 18 causing the carriage assembly 38 to move the remaining distance laterally to the left on the guide bars 40, as shown in Figure 3. This movement causes the workpiece 82 to be moved laterally by the positioning fingers 52 so that the aperture 84 therein is aligned with the broach 72 and with the aperture 64 provided in the shuttle table 16. The tool holder 74 and broach 72 are then brought downwardly so that the broach 72 passes through the aperture 84 in the workpiece 82 and the aperture 64 provided in the shuttle table 16. After the bottom end of the broach 72 has passed through the apertures 84 and 64, it is gripped by the pulling tool 76 and is pulled through the aforementioned apertures. During this process, the tool holder 74 merely acts as a support for the broach 72. As the tool holder 74 approaches the workpiece 82 it releases the broach 72 so that it may pass therethrough completing the broaching process.

While the broaching operation is occurring, solenoids A and C for the control valves 26 and 28, respectively, are deenergized and a solenoid F for the control valve 30 is energised resulting in the lift cylinder 22 being actuated causing the output shaft 60 of the cylinder 22 to move upwardly. This upward movement causes the combination of the shuttle cylinder 18 and loading/unloading assembly 14 to pivot about the pin 32 so as to be tilted downwardly, as shown in Figure 4. Actuation of the lift cylinder 22 also causes the stop pin 68 to pass through the aperture 66 in the shuttle table 16. In this orientation, the sizing probe 56 is raised above the top surfaces of the incoming workpieces allowing these workpieces to move laterally on the shuttle table 16 towards the broaching station. The stop pin 68, however, prevents these workpieces from proceeding too far towards the broaching station so as to not interfere with the broaching process, thus preserving the integrity of the broaching tooling.

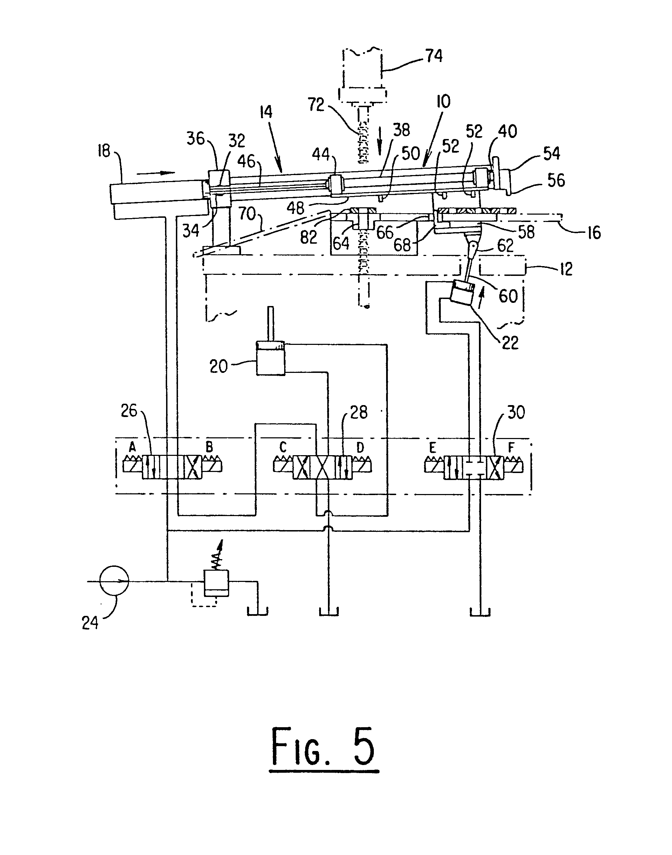

After the workpieces have been properly advanced and indexed against the stop pin 68, the solenoid F for the control valve 30 is deenergized and the solenoids A and C for the control valves 26 and 28, respectively, are energized, which results in actuation of the shuttle cylinder 18 and extension of the output shaft 46 which, in turn, causes the carriage assembly 38 to laterally move to the right on the guide bars 40 to its original position, as shown in Figure 5. Upon arriving at its original position, the solenoids A and C for the control valves 26 and 28, respectively, are deenergized and the solenoid E for the control valve 30 is energized causing the retraction of the output shaft 60 into the lift cylinder 22 which results in the complete assembly of the shuttle cylinder 18 and loading/unloading assembly 14 pivoting about the pin 32 and returning to its original horizontal positions, as shown in Figure 1. In this position, the sizing probe 56 enters the apertures of the incoming workpieces to ensure that they are the proper size, thus ensuring that the broach will not be damaged or broken by machining an undersized aperture.

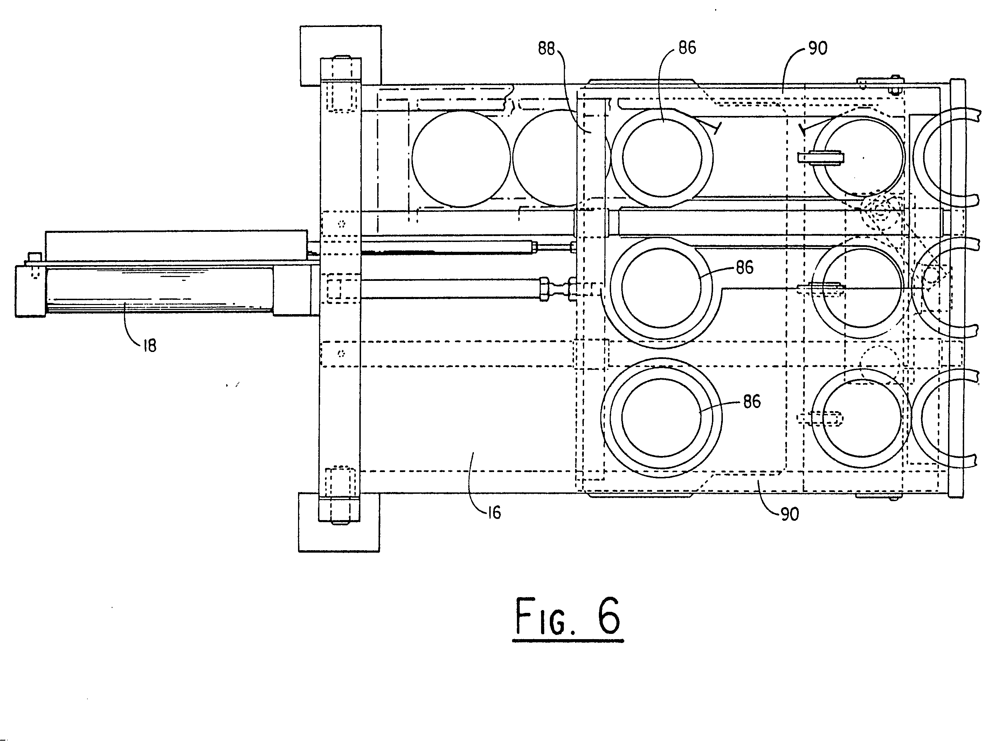

This automatic loading and unloading device described above can be modified so that more than one workpiece is machined simultaneously. As shown in Figure 6, three workpieces 86 are being advanced across the shuttle table 16 by a carriage assembly 88 attached to the shuttle cylinder 18. Depending upon the size of the workpieces, side rails 90 are adjustable to accommodate as many pieces as possible for simultaneous machining. Similarly, because of the width of the shuttle table 16, one workpiece having a relatively large diameter can be readily advanced on the shuttle table 16 to the broaching station for machining. Thus, this automatic loading and unloading device can accommodate a wide range of workpiece sizes and can supply workpieces individually to the broaching station or in multiples for simultaneous machining thereof.

Whether the automatic loading and unloading device is used to index workpieces individually or in multiples thereof, the workpieces proceed to the machining station with a minimum of indexing operations and in a straight line, thus minimizing the possibility of parts jamming the loading device or the broaching machine. In addition, whether individual workpieces or multiples thereof are indexed simultaneously, indexing operations on new workpieces occur simultaneously while the previous workpieces are being broached. Because of this, the speed of the loading and unloading operations is increased considerably resulting in the broaching machine being used at near its optimum efficiency. Also, this automatic loading and unloading device is simple in construction and operation which increases its reliability and makes maintenance thereof a relatively easy task. And lastly, even though this device has been disclosed in conjunction with a broaching machine, it is universal in nature and can be used with any type of high production machinery which requires a constant supply of parts.

8

## CLAIMS

1.     A device for supplying parts to and for removing parts from a machining station, the device (10) being characterised in that it comprises a shuttle table (16) on which, in use, said parts are conveyed to the machining station, means (14) for indexing said parts on the shuttle table (16) as they traverse the shuttle table to the machining station, and means (50) for removing said parts from the machining station, the indexing means (14) being selectively actuatable so as to permit the advancement of said parts on the shuttle table (16) and the introduction of new parts onto the shuttle table during various phases of a machining process performed at the machining station.

2.     A device according to claim 1, wherein the indexing means (14) is operative to convey said parts on the shuttle table (16) to the machining station and away therefrom in an at least approximately straight-line path.

3.     A device according to claim 1 or claim 2, including means for moving the indexing means (14) out of contact with said parts on the shuttle table (16) during the machining process, permitting the introduction of new parts onto the shuttle table during the machining process.

4.     A device according to claim 3, including stop means (68) operative to limit the number of said new parts being introduced onto the shuttle table (16) during the machining process so as not to interfere with the machining process.

5.     A device according to any one of claims 1 to 4, wherein the indexing means (14) is operative to laterally move the shuttle table (16) during resetting of tooling (72) used at the machining station so as to be adjacent the machining station.

6.     A device according to any one of claims 1 to 4, including means for regulating lateral movement of the indexing means (14) so as to selectively position the indexing means with respect to the shuttle means and the machining station to allow resetting of tooling (72) used at the machining station.

7.    A device according to any one of the preceding claims, including means (56) for determining the suitability of each part being introduced onto the shuttle table (16), the part determining means (56) being connected to the indexing means (14) and being operable therewith.

8.    A device according to any one of the preceding claims, wherein the shuttle table (16) includes adjusting means (90) to compensate for different sizes of parts to be conveyed on the shuttle table and machined at the machining station.

9.    A device according to any one of the preceding claims, wherein the machining station can accommodate a plurality of said parts at a time for simultaneous machining of the parts and wherein the indexing means (14) is operative to convey a plurality of said parts simultaneously to the machining station for simultaneous machining of the parts.

10.    A device for supplying parts to and for removing parts from a machining station, the device (10) being characterised in that it comprises a shuttle table (16) on which, in use, said parts are conveyed to the machining station, means (14) for indexing said parts on the shuttle table (16) as they traverse the shuttle table to the machining station, and means (50) for removing said parts from the machining station, the indexing means (14) being operative to convey said parts on the shuttle table (16) to the machining station and away therefrom in an at least approximately straight-line path.

FIG. 1

FIG. 2

0026063

FIG. 3

FIG. 4

FIG. 5

FIG. 6

0026063

## EUROPEAN SEARCH REPORT

Application number

EP 80 30 3107.9

| | DOCUMENTS CONSIDERED TO·BE RELEVANT | | CLASSIFICATION OF THE APPLICATION (Int. Cl.³) |
|---|---|---|---|
| Category | Citation of document with indication, where appropriate, of relevant passages | Relevant to claim | |
| | US – A – 2 343 420 (J.W. PODESTA) <br> * page 1, left column, lines 1 to 17 * <br> -- | 1 | B 23 D 41/06 <br> B 23 Q 7/00 |
| | US – A – 2 571 904 (C.O. LOFGREN) <br> * column 1, lines 1 to 10; <br> columns 3 and 4 * <br> -- | 1 | |
| | US – A – 3 897 715 (H. HOLSTEIN et al.) <br> * column 2, line 63 to <br> column 4, line 17 * <br> -- | 1 | |
| | INDUSTRIE-ANZEIGER, Vol. 94, No. 77, <br> 19 September 1972, <br> Essen <br> "Automatische Räummaschine steigert die <br> Produktion von Automobilteilen" <br> pages 1845 to 1846 <br> * page 1845 "Ununterbrochener Werkstück- <br> fluß" * <br> -- | 1 | |
| A | DE – B – 1 292 994 (OSWALD FORST GMBH) <br> -- | | |
| A | US – A – 3 960 056 (H. HOLSTEIN et al.) <br> -- | | |
| A | US – A – 3 799 030 (L. SCHUBERT) <br> -- | | |
| A | US – A – 1 905 164 (J.P. FERRIS et al.) <br> -- <br> ./.. | | |

TECHNICAL FIELDS SEARCHED (Int. Cl.³)

B 23 D 37/00
B 23 D 41/06
B 23 Q 7/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search <br> Berlin | Date of completion of the search <br> 11-12-1980 | Examiner <br> MARTIN |
|---|---|---|

EPO Form 1503.1 06.78

**European Patent Office**

**EUROPEAN SEARCH REPORT**

| | DOCUMENTS CONSIDERED TO BE RELEVANT | | CLASSIFICATION OF THE APPLICATION (Int. Cl.3) |
|---|---|---|---|
| Category | Citation of document with indication, where appropriate, of relevant passages | Relevant to claim | |
| A | DE – A1 – 2 713 887 (STABILIMENTO INDUSTRIALE COSTRUZIONE MACCHINARIO ATTREZZATURE) | | |
| | | | TECHNICAL FIELDS SEARCHED (Int. Cl.3) |

EPO Form 1503.2  06.78